# EUROPEAN PATENT APPLICATION

(11) **EP 1 056 273 A2**
(43) Date of publication of application: **29.11.2000**
(21) Application number: 00111312.5
(22) Date of filing: 25.05.2000
(51) Int. Cl.: H04N 1/41

(54) **Method and system for providing high quality images from a digital video stream**

(30) Priority: 25.05.1999 US 318408
(71) Applicant: SeeItFirst, Inc., Fremont, CA 94539 (US)
(72) Inventor: Cornelio, Michael Lance Kealahonua, Fremont, CA 94538 (US); Ramasubramanian, Narayanan, Fremont, CA 94539 (US)
(74) Representative: Viering, Jentschura & Partner

(57) **Abstract**

A method and system for providing images from a server to a client over a communication medium with a limited bandwidth is described. In providing the images, a first location in a first video stream that is associated with a first image is identified. Data depicting the first image is then transmitted from the server to the client. In response to receiving a next image request from the client, the server determines a second location in the first video stream that has a particular positional relationship in the first video stream relative to the first location. The server then transmits to the client as the next image a second image associated with the second location. The limited bandwidth of the communication medium is such that playing the first video stream in real time over the communication medium would produce images having a first image quality. However, the first and second images are transmitted at an image quality that is greater than the first image quality.

## Description

### FIELD OF THE INVENTION

The present invention relates to digital video delivery systems, and more specifically, to providing high quality images from a digital video stream.

### BACKGROUND OF THE INVENTION

In recent years, the media industry has expanded its horizons beyond traditional analog technologies. Numerous systems have been developed for transmitting video information digitally from one location to be viewed in real time at another location. One difficulty associated with providing video data in digital format is the bandwidth required to deliver a high quality picture in real time. Consequently, many techniques have been developed for compressing the representation of digital video. However, the more compressed the digital video stream, the more information that is lost in the compression process and the lower the quality of the video image displayed to the viewer.

To compensate for low bandwidth, video may be delivered with fewer frames per second and/or with less resolution. It is not uncommon for digital video to be delivered in resolutions that are significantly smaller than the resolution supported by the device being used to view the video. For example, real-time video is often delivered in 120 by 160 pixel resolution, when most digital viewing devices support resolutions of 640 by 480 and above.

Various video compression techniques have been developed. One popular compression technique is known as wavelet transform, which is described in many publications including "A VLSI Architecture for Real-Time Hierarchical Encoding/Decoding of Video Using the Wavelet Tranform", Mohan Vishwanath, Chaitali Chakrabarti, ICASSP 1994, and VLSI Architecture for Discrete Wavelet Transforms", Parhi, Keshab; Nishitani, Takao IEEE Transactions on Very Large Scale Integration (VLSI) Systems, vol. 1, No. 2, June 1993. Another popular compression technique is known as MPEG compression, which follows international standards: ISO/IEC 13818-1, 2, 3 (MPEG-2) and ISO/IEC 11172-1, 2, 3 (MPEG-1). Documents that describe these standards are available from ISO/IEC Copyright Office Case Postale 56, CH 1211, Genève 20, Switzerland.

Different compression techniques require different amounts of computational power to perform compression. If a video server has enough computational power, digital video may be compressed during the delivery of the digital video to a viewer in real time ("on the fly"). If a video server does not have enough computational power to perform on-the-fly compression, digital video may be pre-compressed before real-time delivery of the video begins.

Typically, a video server that delivers digital video that is compressed on-the-fly will determine the bandwidth available to send the video to a particular destination (the "client") before initiating the transmission of the video. The video server will then select a compression ratio based on the available bandwidth. For example, a higher compression ratio will be selected to deliver video to a client that is connected to the server through a 14.4K baud modem than will be selected to deliver video to a client that is connected to the server through a 28.8K baud modem. This compression ratio will typically be in effect for the duration of the delivery of video to that particular client.

A video server that delivers digital video that is pre-compressed may not be free to adjust the compression ratio of a stream of digital video data based on the bandwidth to a particular client. Consequently, digital video that is pre-compressed is often pre-compressed with low-bandwidth clients in mind. Thus, even high-bandwidth clients often receive low-resolution, low-quality video images.

Often, users would like to be able to create a "snapshot" of the video image that is being supplied to a client. For example, the video may be of a basketball game and the user may wish to have a snapshot of a star player making a slam dunk. The ability to create snapshots may also be useful for business situations. For example, it may be desirable to have a snapshot of a diagram or white board that is momentarily displayed during a video conference.

Using current technology, such snapshots can be created by performing a "screen capture" or "screen dump" while the desired image is being displayed to the viewer. Unfortunately, the size and quality of such snapshots will be no better than the size and quality of the video image as it is delivered in real time. As explained above, the quality of the real time image is reduced by the constraints imposed by the need to supply the video image in real time over a narrow bandwidth.

Video capture mechanisms that produce digital photographs from analog video signals generated from external video devices have been developed. However, such mechanisms generally do not work with digital input. Further, such hardware mechanisms do not have to address the quality limitations associated with the real-time delivery of digital video over media with limited bandwidths. In addition, such video capture mechanisms require the recipient of the photograph to acquire special additional hardware.

Based on the foregoing, it is clearly desirable to provide a mechanism that allows a user to obtain a snapshot of a video image, where the snapshot has a size and quality that is not dictated by the bandwidth between the video server and the client. It is further desirable to increase the quality of the video image received by a client with a limited bandwidth in response to conditions that allow the higher quality image to be sent over the limited bandwidth.

### SUMMARY OF THE INVENTION

The foregoing needs, and other needs and objects that will become apparent from the following description, are achieved in the present invention, which comprises, in one aspect, a method for providing images from a server to a client over a communication medium with a limited bandwidth is described. In providing the images, a first location in a first video stream that is associated with a first image is identified. Data depicting the first image is then transmitted from the server to the client. In response to receiving a next image request from the client, the server determines a second location in the first video stream that has a particular positional relationship in the first video stream relative to the first location. The server then transmits to the client as the next image a second image associated with the second location. The limited bandwidth of the communication medium is such that playing the first video stream in real time over the communication medium would produce images having a first image quality. However, the first and second images are transmitted at an image quality that is greater than the first image quality.

According to another feature, the step of determining a second location in the first video stream that has a particular positional relationship in the first video stream comprises the steps of identifying an offset from the first location and, based on the offset, determining the second location in the first video stream.

In yet another feature, the step of transmitting data depicting the first image further comprises the steps of determining a plurality of locations within a second video stream; retrieving image data that is associated with the plurality of image locations; and transmitting the image data for display as a gallery of images at the client.

In another feature of this aspect, after transmitting the image data for display as a gallery of images at the client, performing the step of receiving a selection request message from the client that identifies a particular gallery image within the gallery of images. In response to receiving the selection request message, determining a location in the second video stream based on the selected gallery image and transmitting to the client as the next image a third image associated with the location in the second video stream.

### BRIEF DESCRIPTION OF THE DRAWINGS

The present invention is illustrated by way of example, and not by way of limitation, in the figures of the accompanying drawings and in which like reference numerals refer to similar elements and in which:
FIG. 1A is a block diagram of a digital video delivery system that uses on-the-fly compression according to an embodiment of the invention;
FIG. 1B is a block diagram of a digital video delivery system that uses pre-compressed video data according to an embodiment of the invention;
FIG. 2A is a portion of a flow chart that illustrates the operation of a digital video delivery system according to an embodiment of the present invention;
FIG. 2B is another portion of the flow chart illustrated in Figure 2A;
FIG. 2C is another portion of the flow chart illustrated in Figure 2A;
FIG. 3 is a block diagram that illustrates the ability to direct selected snapshots to destinations other than the client that requests the snapshots;
FIG. 4A is a block diagram of a video image delivery system in which the present invention may be utilized;
FIG. 4B is another block diagram of a video image delivery system in which the present invention may be utilized;
FIG. 5A depicts an example of a video image and a set of user interface controls that may be displayed by a browser in response to receiving a video image and user interface control information from a server;
FIG. 5B depicts an example of another video image and a set of user interface controls that may be displayed by a browser in response to receiving a video image and user interface control information from a server;
FIG. 6A depicts a photo gallery, a current video image and user interface controls being displayed in a video display;
FIG. 6B depicts a photo gallery, a different current video image and user interface controls being displayed in a video display;
FIG. 7 contains a flow diagram that illustrates the steps performed by a video image delivery system according to certain embodiments of the inventions; and
FIG. 8 illustrates an example of a portion of a video stream that includes a plurality of image data.

### DETAILED DESCRIPTION OF THE PREFERRED EMBODIMENT

A method and apparatus for providing high quality snapshots that correspond to images from a lower-quality video stream is described. In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention.

### HARDWARE OVERVIEW

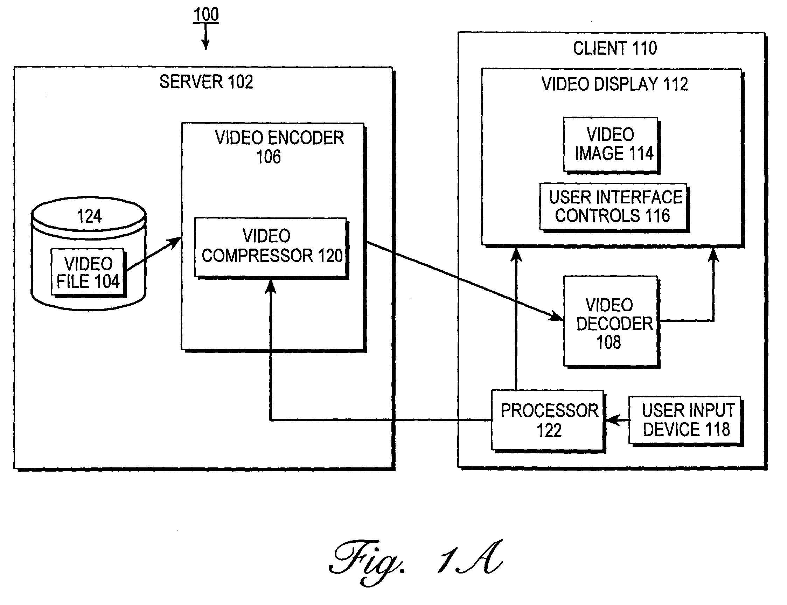

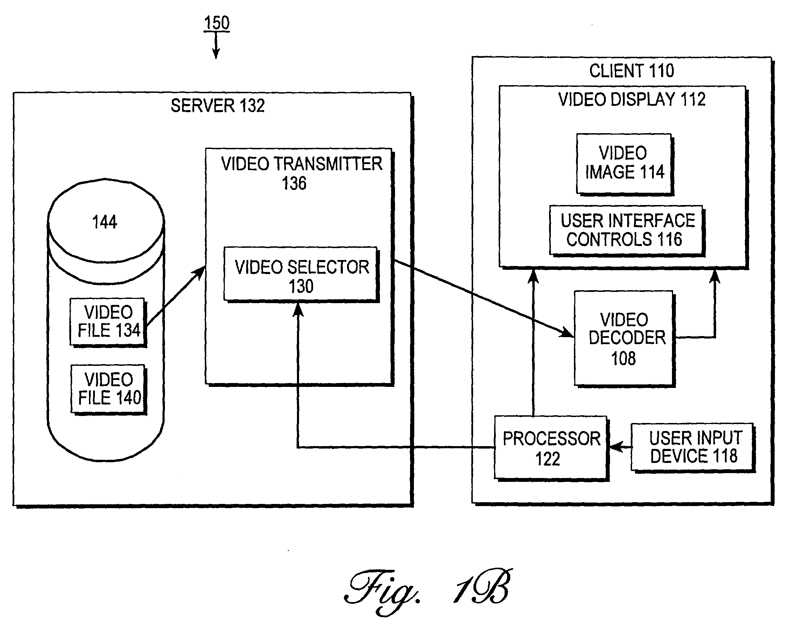

The present invention is not limited to any particular type of digital video format. Therefore, embodiments of the invention will be described for both on-the-fly and pre-compressed digital video delivery systems. An exemplary video display system that uses on-the-fly compression is illustrated in Figure 1A, while an exemplary video display system that delivers pre-compressed video data is illustrated in Figure 1B.

### ON-THE-FLY VIDEO DELIVERY SYSTEMS

Referring to Figure 1A, it is a block diagram of a digital video delivery system 100 upon which an embodiment of the present invention can be implemented. System 100 includes a server 102 and a client 110. Server 102 generally includes a storage device 124 and a video encoder 106. Storage device 124 stores a video file 104. Video encoder 106 encodes video into a digital stream using on-the-fly compression, and therefore includes a video compressor 120.

Server 102 is coupled to client 110 through a communication medium that supports the transport of digital data. Server 102 may be, for example, a web server on the internet and client 110 may be connected to the internet through a dial-up connection. Alternatively, server 102 and client 110 may both be workstations on a local area network. The present invention is not limited to any particular communication medium or network environment.

Client 110 generally includes a video display 112, a video decoder 108, a processor 122 and a user input device 118. Video display 112 generally represents any device capable of displaying digital information. Video decoder 108 is configured to decode a digital video stream and display the resulting video images on video display 112. In an Internet or Intranet environment, video decoder 108 may be, for example, implemented in an HTTP client, commonly referred to as a "web browser". Decoder 108 may be coded as part of the web browser itself, or may be implemented as a "plug in" that is dynamically linked to a web browser.

In Figure 1A, video decoder 108 is decoding the digital video stream received from video encoder 106 and transmitting a signal to video display 112 to cause a video image 114 decoded from the video stream to be displayed on video display 112.

Processor 122 generally represents one or more processors that belong to client 110. Processor 122 executes sequences of instructions contained in the dynamic memory of client 110. For the purposes of explanation, video decoder 108 is shown separate from processor 122. However, video decoder 108 may be implemented in hardware, software, or a combination of hardware and software. When implemented by software, the functions of video decoder 108 may be performed by causing processor 122 to execute sequences of instructions for decoding a video stream.

User input device 118 generally represents one or more devices for receiving input from a user. For example, user input device 118 may include a keyboard, a mouse, a track-ball, a touch pad, and/or a pen input device. In response to user input from the user input device 118, processor 122 may cause a cursor to move on video display 112. By manipulating user input device 118, a user may interact with user interface controls 116 generated on video display by processor 122.

### USER INTERFACE CONTROLS

As mentioned above, processor 122 executes instructions which cause user interface controls 116 to be displayed on video display 112. According to one embodiment of the invention, the user interface controls 116 generated by processor 122 include controls similar to those found on a video cassette recorder. Such controls may include, for example, a forward button, a rewind button, a slow button, a pause button, and a slow motion button. A user interacts with these control using user input device 118. As shall be described in greater detail hereafter, processor 122 transmits messages to server 102 that affect the encoding of the video stream in response to certain user interactions with the user interface controls 116.

### MAXIMIZING BANDWIDTH USAGE DURING SLOW MOTION

According to one embodiment of the invention, server 102 initially determines the compression ratio that video compressor 120 will use to deliver the video contained in video file 104 to client 110 based on a specified frame delivery rate and the bandwidth between server 102 and client 110. The lower the bandwidth, the higher the compression ratio used by video compressor 120 and the lower the quality of the video image 114 displayed on video display 112.

When the user enters user input through user input device 118 that selects the "slow" button displayed in the user interface controls 116, processor 122 transmits a message to server 102 that indicates a new frame transmission rate. In prior art video delivery systems, the video encoder would simply respond by sending data at a slower rate. Consequently, the bandwidth that is fully utilized during normal rate playback is under-utilized during slow speed playback.

According to an embodiment of the present invention, video encoder 106 dynamically adjusts the compression ratio used by video compressor 120 during slow playback to fully utilize the available bandwidth to client 110. The slower the frame rate specified by the user, the lower the compression ratio employed by the video encoder. Consequently, a higher quality image will be displayed on video display 112 during slow motion playback.

When a user selects the "pause" button on the user interface controls 116, the client pauses playback of the video. The user may select a "camera" control to obtain a high quality digital image of the frame currently being displayed, as shall be described in greater detail hereafter.

### PROVIDING HIGH QUALITY SNAPSHOTS

According to one embodiment of the invention, user interface controls 116 include a button that depicts a camera. When a user selects the camera button, processor 122 transmits a message to server 102 to indicate that the camera button was selected. The message also includes data that identifies the particular frame displayed in video image 114 when the camera button was selected. The frame may be identified, for example, by a frame number or by an offset value into the video file 104. The value used to identify each frame is contained within the video stream transmitted from server 102. The present invention is not limited to any particular format in which to represent the displayed frame.

In response to the message from client 110, video compressor 120 locates the frame specified in the message and transmits the video information that corresponds to the frame from video file 104 with little or no compression. Consequently, the client 110 will receive a still "snapshot" of the specified frame that has a much higher resolution and quality than when the same frame was delivered to client 110 in real time. For example, the resolution of the video sent during normal speed real-time playback maybe 160 by 120 pixels, while the resolution of the image sent when the camera button is selected may be 640 by 480 pixels.

According to one embodiment, the user will receive a still frame of the highest quality that can be produced by video file 104, which may itself store the video in a slightly compressed format. According to an alternative embodiment, the user is provided controls for specifying the quality of the snapshot. Because the frame delivery rate is or becomes zero when the camera button is selected, the quality and resolution of the image sent in response to selection of the camera button may be selected independent of the bandwidth between the server and the client.

### NON-HIERARCHICAL VIDEO DELIVERY SYSTEMS

Figure 1B is a block diagram of a digital video delivery system 150 that includes a server 132 and client 110. Video server 132 includes a video transmitter 136 for transmitting a video stream that has been pre-compressed using, for example, MPEG-2 compression techniques. Video server 132 further includes a storage 144 that contains multiple versions of a video. In the illustrated example, storage 144 contains a video file 134 that has been pre-compressed using one compression ratio, and a second video file 140 that has been pre-compressed using a different, lower compression ratio. Because video file 140 has been compressed with a lower compression ratio than video file 134, the images represented in video file 140 have a higher resolution and higher quality than the corresponding images represented in video file 134. However, the amount of data contained in video file 140 is too great relative to the bandwidth between server 132 and client 110 for video file 140 to be viewed at client 110 in real-time.

According to an embodiment of the invention, server 132 is configured to switch between video file sources to provide increased quality slow motion and high quality snapshots. Specifically, server 132 initially determines which of video files 134 and 140 to transmit to client 110 based on a specified frame delivery rate and the bandwidth between server 132 and client 110. The lower the bandwidth, the higher the compression ratio of the video file selected by video transmitter 136 and the lower the quality of the video image 114 displayed on video display 112.

For the purposes of explanation, it shall be assumed that the bandwidth between server 132 and client 110 is such that only the highly compressed video file 134 can be delivered in real-time. Therefore, video selector 130 initially selects video file 134, and video transmitter 136 begins the transmission of data from video file 134.

When the user enters user input through user input device 118 that selects the "slow" button displayed in the user interface controls 116, processor 122 transmits a message to server 132 that indicates a new frame transmission rate. Upon receiving the new frame transmission rate, video transmitter 136 determines whether data from any less-compressed video file can be delivered in real-time at the slower frame transmission rate. If data from the less-compressed video file can be transmitted at the slower frame transmission rate, video selector 130 switches to the less-compressed video file. Video transmitter 136 then proceeds to transmit a video stream from the less-compressed video file. Consequently, a higher quality image will be displayed on video display 112 during slow motion playback.

Preferably, switching the input file at the server 132 does not cause a skip in the video as it is viewed at client 110. Therefore, server 132 stores data that indicates the correlation between the frames in video file 134 and the frames in video file 140. When video selector 130 switches from video file 134 to video file 140, video transmitter 136 begins transmission from video file 140 at a frame that corresponds to the last frame sent from video file 134.

When a user selects a button to switch from slow motion to normal speed playback, a message is sent to server 132. In response to the message, video selector 130 switches to the more highly compressed video file 134. The data indicating the correlation between the frames of video files 134 and 140 are again accessed to determine the appropriate frame at which to begin transmission from video file 134.

When a user selects the "pause" button on the user interface controls 116, the client pauses playback of the video. When a user selects the camera button, processor 122 transmits a message to server 132 to indicate that the camera button was selected. The message also includes data that identifies the particular frame displayed in video image 114 when the camera button was selected. In response to the message from client 110, video selector 130 locates the frame within the least-compressed video file that corresponds to the frame specified in the message. Video transmitter 136 then transmits the video information that corresponds to the frame from the least-compressed video file. Consequently, the client 110 will receive a still "snapshot" of the specified frame that has a much higher resolution and quality than when the same frame was delivered to client 110 in real time.

Preferably, video files 134 and 140 are compressed using a compression technique that allows a user to scroll through the compressed video bidirectionally. Under these conditions, a user may operate the user interface controls 116 to move through the video sequence both forward and back, with slow motion and pause controls to find the exact frame desired for a snapshot. A high resolution version of that frame is then sent to the client 110 when the camera button is selected, as explained above.

In the foregoing description, storage 144 includes only two versions of the video being viewed at the client 110. However, storage 144 may include any number of versions, each of which is pre-compressed using a different compression ratio. Under these conditions, video selector 130 selects the video file with the lowest compression ratio that can be transmitted over the available bandwidth at the specified frame display rate. As the user decreases the frame rate during playback, the video selector dynamically switches to video files with lower compression ratios. According to one embodiment, the video file with the lowest compression ratio is always used to transmit a snapshot back to the client 110 in response to selection of the camera button.

### DIGITAL VIDEO DELIVERY OPERATION

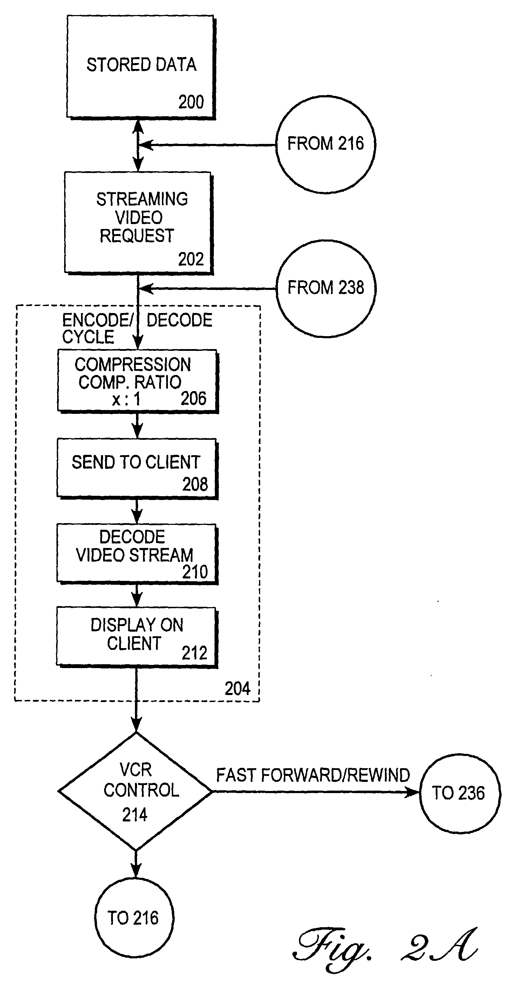

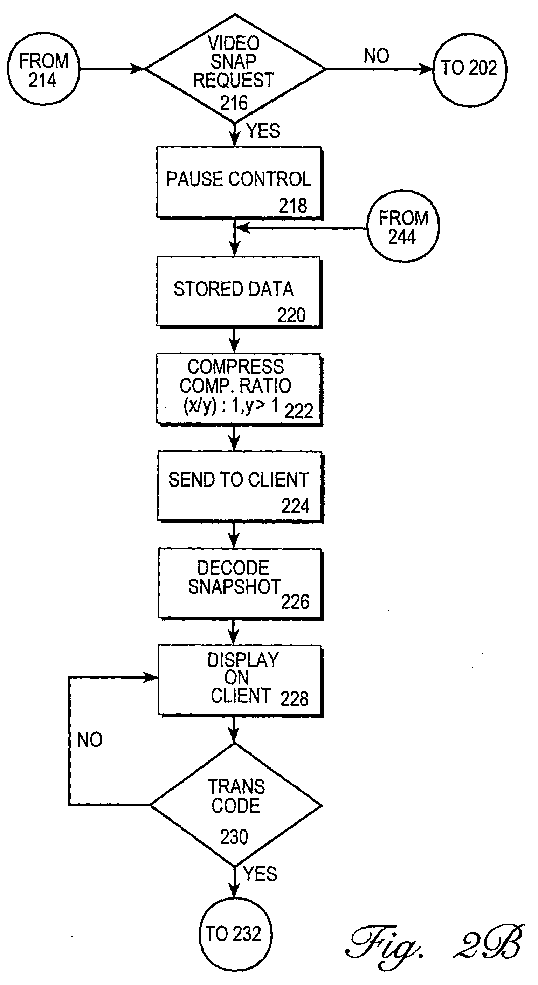

Figures 2A, 2B and 2C contain a flow chart that illustrates the steps performed by a digital video delivery system according to an embodiment of the invention that uses on-the-fly compression. Block 200 generally represents digital video data stored on a storage device of a video server. The digital data may be uncompressed or pre-compressed. However, if the video data is pre-compressed, it is not pre-compressed to the degree required to be able to transmit the video to a client for normal-speed playback in real time. Consequently, some additional on-the-fly compression must be performed to send the video to the client for normal-speed, real-time playback.

At step 202, the server receives a request to begin streaming video to a client. From step 202, control proceeds to block 204. Block 204 generally represents a steady state in which the video data is compressed (step 206), sent to the client (step 208), decoded at the client (step 210) and displayed at the client (step 212). The compression ratio (X:1) used to compress the data at step 206 is determined based on the bandwidth between the server and the client and a specific frame transmission rate. Specifically, the compression must be such that the bandwidth is able to carry video to the server at the specified frame rate. The on-the-fly compression ratio will be less for video data that has been pre-compressed.

At step 214, the server receives a message from the client that indicates that a user at the client has selected a control on the VCR-like user interface controls displayed on the client. If the message indicates that a user has selected a fast forward or rewind control, control passes to step 236. If the message indicates that the user has selected something other than a fast forward or rewind control, control passes to step 216.

At step 216, it is determined whether the message indicates that the user has selected a "video snap" control. Selection of the video snap control indicates that the user desires a quality snapshot of the video currently being viewed by the user. If the message indicates that the user has selected the video snap control, control passes to step 218. Otherwise, control passes back to step 202.

At step 218, the server pauses the transmission of video to the client. At step 220, the video data that is stored on the server is accessed to acquire the video data for the frame currently displayed at the client. However, the retrieved video data is not compressed using the same compression ratio X:1 as was used at step 206. Rather, at step 222 the retrieved video data for the selected frame is compressed using a compression ratio X/Y:1, where Y > 1. Consequently, the image represented in the video data will have a higher image quality and resolution than the corresponding image that was sent to the user in the real-time video stream.

According to one embodiment, the user at the client is able to specify options relating to the quality of the images that will be generated in response to selection of the video snap control. The message sent to the server when the user selects the video snap control contains data that indicates the selected quality. The selected quality is then used to select the compression ratio used at step 222. The user may specify the quality in a variety of ways, including specifying a desired resolution or a desired compression ratio. The present invention is not limited to any particular form of specifying the image quality of snapshots.

At step 224, the less-compressed (or uncompressed) data for the selected frame of video is transmitted from the server to the client. At step 228, the high resolution image is decoded at the client from the less-compressed video data and displayed at the client. Control then proceeds to step 230.

At step 230, the user may convert ("transcode") the high resolution snapshot to a specified image format, such as JPEG, PCX, BMP, TIFF, etc. If the user transcodes the image, the image is converted to the appropriate format at step 232 and saved at step 234. This process may be repeated to create any number of stored copies of the image.

As mentioned above, control passes to step 236 when the user has selected either fast forward or rewind. At steps 236 and 238 the server accesses the appropriate files on the stored data. In addition, the compression ratio and the frame transmission rate are adjusted as appropriate to the specified operation. Control then proceeds to the encode/decode cycle illustrated at block 204.

For digital video distribution systems that transmit video that has been pre-compressed, the steps are only slightly changed. Specifically, at step 206 a source video file is selected based on the pre-compression ratio of the video file and the bandwidth available to transmit the video to the client. At step 222, a video file that is pre-compressed with a lower pre-compression ratio than the video file selected at step 206 is selected. Data from that less-compressed file is transmitted at step 224.

### DIRECTED SNAPSHOTS

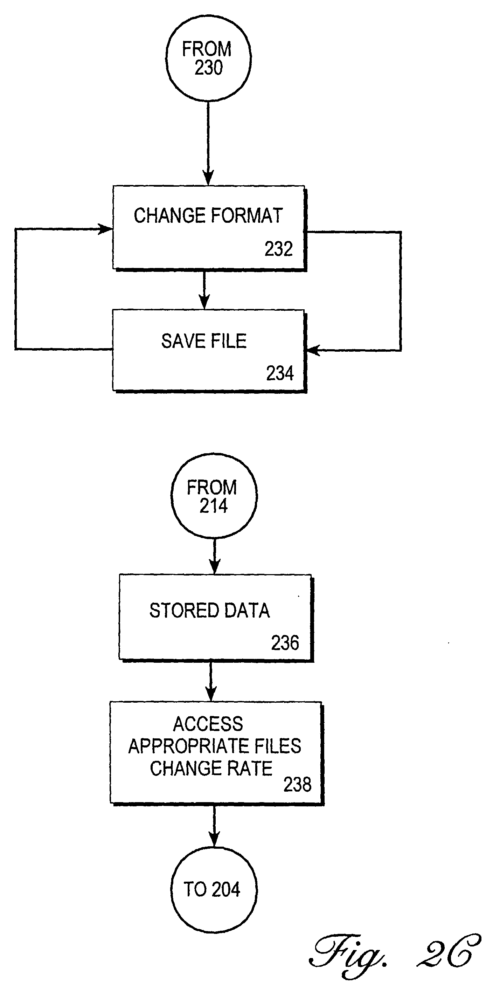

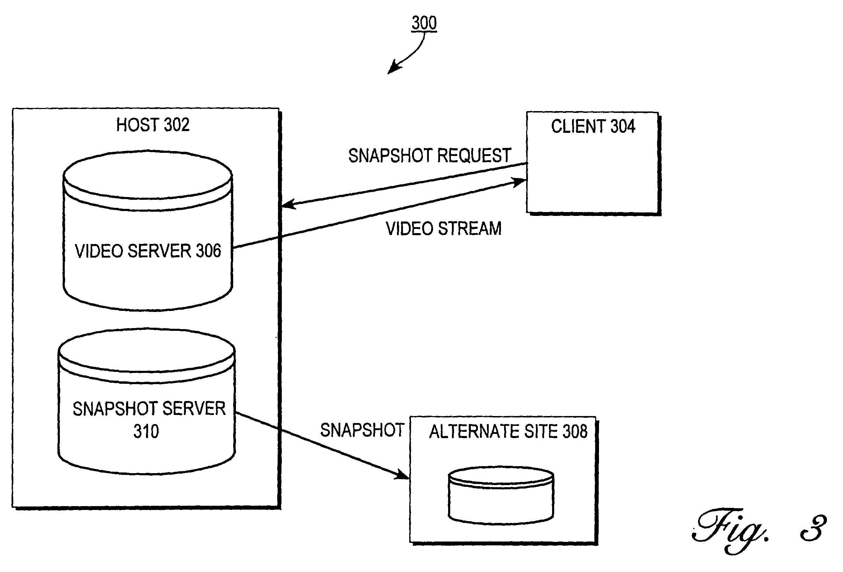

According to an embodiment of the invention, a snapshot delivery system is provided in which a snapshot selected from a video stream using the techniques described above may be sent to one or more locations other than or in addition to the location of the client. Figure 3 illustrates such a system.

Referring to Figure 3, a snapshot deliver system 300 is illustrated in which a client 304 is receiving a video stream from a video server 306 provided by a host 302. When the user of client 304 has located an image in the video stream of which the user desires a snapshot, the user causes the client 304 to transmit a snapshot request to the host 302. However, the software at the client 304 embeds address information in the snapshot request. The address information may be, for example, a list of URLs or electronic mail addresses to which the snapshot is to be sent.

In response to receiving the snapshot request, the host 302 extracts the address information as well as the frame identification information from the request. The host 302 generates a high quality snapshot of the frame identified in the snapshot request and transmits the snapshot to the locations designated in the address information. In the illustrated system 300, the host sends the snapshot to an alternative site 308 that was designated in the address information embedded in the snapshot request.

When the destinations specified for the snapshot do not include the client, the client is free to continue processing or even log off without having to wait for the generation and delivery of the specified snapshot. For example, a user may continue viewing the video in real time while selected snapshots are being prepared and sent to an image processing facility or to the e-mail account of the user.

The ability to direct snapshots to destinations other than the client may be combined with the ability to specify varying degrees of image quality for the snapshot to provide efficient snapshot delivery systems. For example, since higher quality and/or larger size video snapshots take longer to generate, a client side user may elect to view a lesser quality or smaller sized video snapshot in order to evaluate the snapshot. Thus, a user would send a first snapshot request to the host. The first snapshot request would indicate an image from the video, a first snapshot quality, and that the client is the destination for the snapshot. In response to the first snapshot request, a digital snapshot of the specified image that has the first snapshot quality is sent from the host to the client.

If the snapshot is deemed satisfactory by the client user, the client user causes the client to send a second snapshot request to the snapshot server for a larger and/or higher quality video snapshot of the same image. The second snapshot request contains data indicating the higher image quality and an alternative destination for the higher quality snapshot. Such alternative destinations may be, for example, an image processing facility. In response to the second snapshot request, the host sends the high quality snapshot to the specified alternative destination. The image processing facility may enhance the snapshot and/or print the snapshot on any of various media, and then send the finished product to addresses provided by the requesting client.

Preferably, all of the destinations specified in the snapshot requests are communicatively coupled to the host 302 in a way that allows the host 302 to send the snapshots to the destinations. However, the destinations may not be coupled to the host 302 in the same manner or as part of the same network as the client 304 that issues the snapshot request. For example, client 304 may be coupled to host 302 over the Internet, while the alternative site 308 is coupled to the host 302 over a high-speed point-to-point digital connection.

As mentioned above, the snapshot request may include an entire list of destination addresses. According to one embodiment, the user specifies the image quality for each destination address. For example, the user may indicate that a snapshot of an image is to be sent to both the e-mail address of the user and to an image processing facility. The user may specify that the snapshot copy sent to the e-mail be of an intermediate quality and resolution, while the snapshot copy sent to the image processing facility be of the highest possible quality and resolution.

### ADDRESS INFORMATION

As mentioned above, the address information used to designate destinations for requested snapshots may include URLs and/or e-mail addresses. However, the present invention is not limited to specifying addresses in this manner. For example, the address information may simply be criteria that a destination must satisfy. The host 302 compares the specified criteria against information about known destinations to identify the address of a destination that satisfies the criteria. The host 302 then sends the snapshot electronically to the destination. The host 302 may also send back to the client 304 information about the destination to which the host 302 sent the snapshot.

For example, the address information may simply indicate the type of facility to which the snapshot is to be sent (i.e. an image enhancement facility) along with the street address or zip code of the client 304. The host 302 compares the street address of the client against a repository of known image enhancement facilities to identify the image enhancement facility that is geographically closest to the client 304. The host 302 then transmits the snapshot to the appropriate image enhancement facility, and a message to the client 304 that identifies the image enhancement facility to which the snapshot was sent.

### SNAPSHOT SERVER

Host 302 includes a video server 306 and a snapshot server 310. The video server 306 is used to deliver video to client 304. Snapshot server 310 is used to generate and deliver the digital images requested by client 304. As mentioned above, such snapshots may be generated from the video files used to deliver the video to the user, or from video files containing the same image information but with different compression characteristics. Alternatively, snapshot server 310 may contain a set of pre-generated images, and data that indicates a correspondence between the pre-generated images and the frames in the video files used by the video server 306. Also, it is possible that the video and snapshot servers may be combined.

### PROVIDING HIGH QUALITY IMAGES FROM A VIDEO STREAM

A drawback associated with the techniques described above is that before a video stream can be viewed at a client, the client must first be configured to include a video player that is capable of playing the video stream format. Thus, only clients that have been properly configured can be used to view video images that are contained within a video stream.

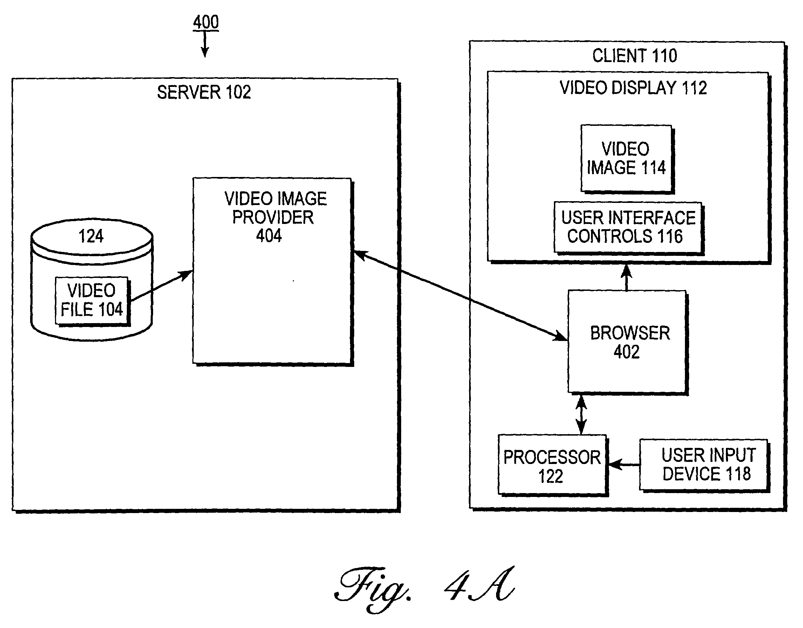

FIG. 4A is a block diagram of a video image delivery system 400 that allows a user to view images of a video whether or not a particular client is configured to include a video player. FIG. 4A is similar to FIG. 1A and therefore like components have been numbered alike. In this example, server 102 includes a video image provider 404 that is configured to provide digital images from video file 104 to client 110. More specifically, video image provider 404 is configured to receive requests from client 110 that indicate that a "next" image is to be sent to client 110. In response to receiving a next image request, video image provider 404 identifies a "next" image location within video file 104. Video image provider 404 then retrieves the image information that is associated with the next image location (the "extracted image data") and sends the extracted image data to browser 402. According to one embodiment, the extracted images are sent at a higher image quality than the bandwidth between server 102 and client 110 would allow the video images to be sent when played in a video stream in real-time. Examples of how the next image locations may be determined are described in detail below.

In certain embodiments, in addition to the extracted image data, video image provider 404 also sends user interface control information to client 110. As is discussed in detail below, the user interface control information is decoded by browser 402 and displayed as user interface controls 116 on video display 112.

In the present example, client 110 generally includes a video display 112, a browser 402, a processor 122 and a user input device 118. Browser 402 is configured to decode and display digital images on video display 112. In one embodiment, browser 402 does not include a video decoder for decoding a digital video stream and therefore cannot decode a digital video stream and display the resulting video images on video display 112.

Processor 122 generally represents one or more processors that belong to client 110. Processor 122 executes sequences of instructions contained in the dynamic memory of client 110. In one embodiment, the functions of browser 402 are performed by executing a particular sequence of instructions within processor 122.

As mentioned above, user input device 118 generally represents one or more devices for receiving input from a user. For example, user input device 118 may include a keyboard, a mouse, a track-ball, a touch pad, and/or a pen input device. In response to user input from the user input device 118, processor 122 may cause a cursor to move on video display 112. By manipulating user input device 118, a user may interact with user interface controls 116 generated on video display by processor 122.

Upon receiving user interface control information from server 102, browser 402 causes user interface controls 116 to be displayed on video display 112. According to one embodiment of the invention, the user interface controls 116 include various user interface controls that allow users to control what images are sent from server 102 and to manipulate the image once it is received at client 110.

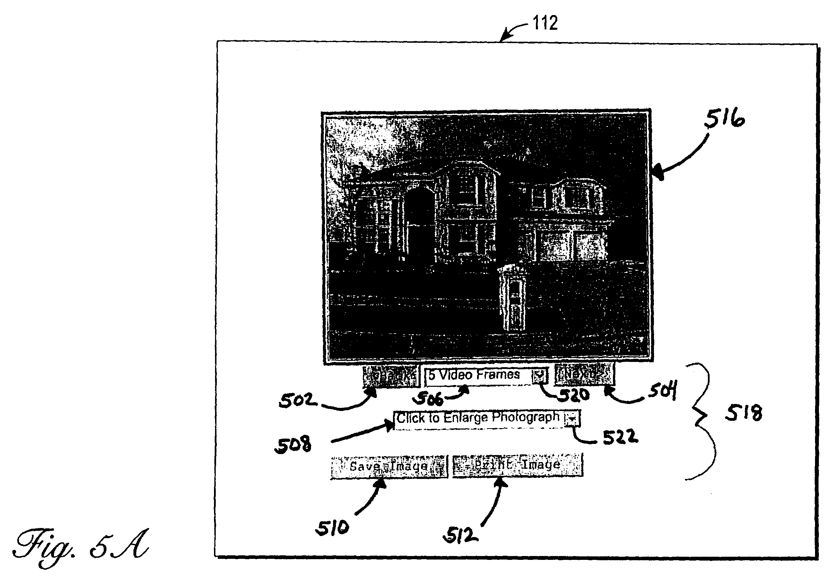

For example, FIG. 5A depicts an example of a current video image 516 and user interface controls 518 that are displayed on video display 112 by browser 402 in response to receiving a video image and user interface control information from server 102. In this example, current video image 516 represents an image within video file 104 that has been retrieved and sent to browser 402 by video image provider 404. In certain embodiments, in response to an initial image request from browser 402, video image provider 404 sends a default video image to client 110. For example, in receiving an initial request from browser 402, video image provider 404 may retrieve and send the first image in video file 104 to client 110.

User interface controls 518 represent a set of control functions that have been provided to allow a user to control what images are sent from server 102 and to manipulate the images once they are displayed on video display 112. In this example, user interface controls 518 include a "back" button 502, a "next" button 504, a "video frames" pull-down menu 506, an "enlarge photograph" pull-down 508, a "save image" button 510 and a "print image" button 512.

For explanation purposes, the method of moving from one frame to another within a video stream is referred to as "shifting". For example, if the current frame of a video stream is frame "100", a forward or positive shift of "10" will cause the current frame of the video stream to be updated to frame "110".

Video frames pull-down menu 506 provides a mechanism that allows user to select and/or control the number of frames that are to be shifted ("frame offset"), with respect to current video image 516, when either the back button 502 or the next button 504 is selected. In one embodiment, the frame offset is used to determine the next image that is to be retrieved from video file 104. Back button 502 and next button 504 allow the user to respectively control whether the number of frames shifted is either backwards or forwards with respect to the current image. For example, by selecting next button 504, a user can cause the image that is "5" frames ahead of the current video image 516 to be displayed in video display 112. Alternatively, by selecting back button 504, a user can cause the image that is "5" frames behind of the current video image 516 to be displayed in video display 112.

Enlarge photograph pull-down 508 allows the user to display an enlarged image of the current video image 516 on video display 112. In one embodiment, by selecting the pull-down button 522, a user is presented with several different resolutions for displaying the current video image 516. By selecting a particular resolution, the user can view an enlarged image of the current video image on video display 112. For example, by selecting pull-down button 522, a user may view an enlarged image of the current video image by factors of: 1.5 x (480x360); 2.0 x (640x480); 2.5 x (800x600) or 3.0 x (1024x768).

Save image button 510 provides a mechanism that allows the user to save the current video image to disk. In one embodiment, in response to selecting save image button 510, the user is provided with a save file window that allows the user to specify a particular location in which the current video image 516 is to be saved.

Print image button 512 provides a mechanism that allows the user to print a copy of the current video image 516.

Although certain figures depict a single server 102 that is configured to provide video images to a single client, in certain embodiments of the invention, these functions may actually be performed by a plurality of servers and clients. For example, in one embodiment, although a message requesting a "next" image is received from the client at a first server, a separate second server may be configured to transmit the next image back to the client. In addition, in certain embodiments, a message request may be received from a first client, however the corresponding "next" image may actually be returned to a second client.

### IDENTIFYING NEXT IMAGE LOCATIONS

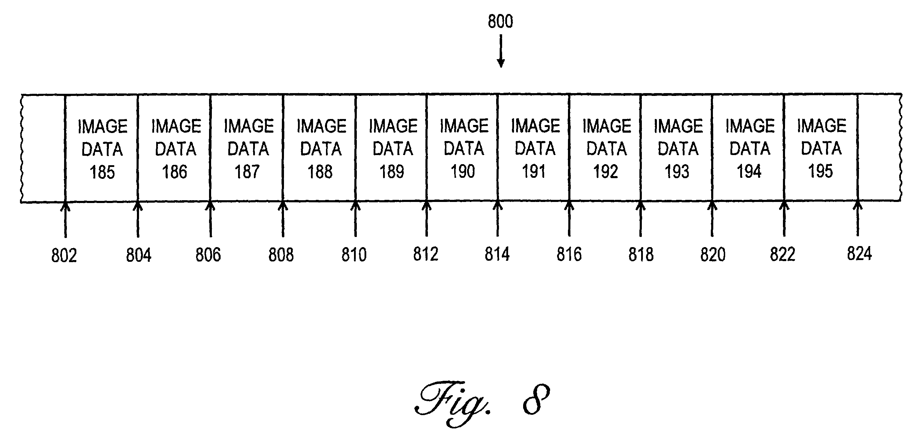

As previously indicated, several methods may be used by the video image provider 404 to determine the next image location. For example, FIG. 8 illustrates an example of a portion of a video stream 800 that includes image data 185-195. In one embodiment, image data 185-195 each correspond to a particular frame within video stream 800. Associated with image data 185-195 are corresponding image locations 802-824. In one embodiment, in response to receiving a next image request from client 110, video image provider 404 identifies a next location within video stream 800 based on a previously used image location.

For example, for explanation purposes it shall be assumed that the last image displayed on video display 112 is based on the image data 190 which corresponds to "current" image location 812 of video stream 800. When a next image request is received from client 110, video image provider 404 identifies a next image location within video stream 800 based on current image location 812. The image data associated with the next image location is then extracted from video stream 800 and sent to client 110.

In certain embodiments, the "next image requests" received from client 102 include a frame offset and a direction indicator. Based on the current image location, the direction indicator and the frame offset, video image provider 404 identifies a next image location and the corresponding image data that is to be sent to client 102. For example, if a frame offset of "3" and a direction indicator of "back" are received, and the current image location corresponds to image location 812, video image provider 404 identifies image data 187 at location 806 as the next image data that is to be sent to client 102. Video image provider 404 then retrieves the image data 187 from video stream 800 and sends it to client 110. Video image provider 404 then marks image location 806 as the current image location within video stream 800.

### PROVIDING A VIDEO STREAM BASED ON A SELECTED VIDEO IMAGE

In certain embodiments, the user interface controls include control features, such as those typically found on a VCR, that allow a user to control the playing of a video from the point in which high quality image is currently being displayed. By selecting the play button the user can cause a video to begin playing at the client from the location from which the currently displayed image is located.

For example, in certain embodiments, the video image delivery systems may also include several of the components previously described in FIG. 1A and FIG. 1B. In this manner, the user interface controls 518 may include buttons that allow the user to control the playing of a video. In one embodiment, by selecting the play button the user can cause a play request message to be sent to the server 102. In response to receiving the play request message, video encoder 106 or video transmitter 136 as respectively described in FIG. 1A and FIG. 1B, initiates the playing of the video from the currently selected high quality image. For example, if the high quality image currently displayed at client 110 corresponds to image data 188 as depicted in FIG. 8, in response to receiving a play request message from client 110, server 102 begins sending a digital video stream starting with image data 189 to client 110. Upon receiving the digital video stream, browser 402 decodes the digital video stream and displays the resulting video images on video display 112.

### PROVIDING IMAGES FROM MULTIPLE VIDEO STREAMS

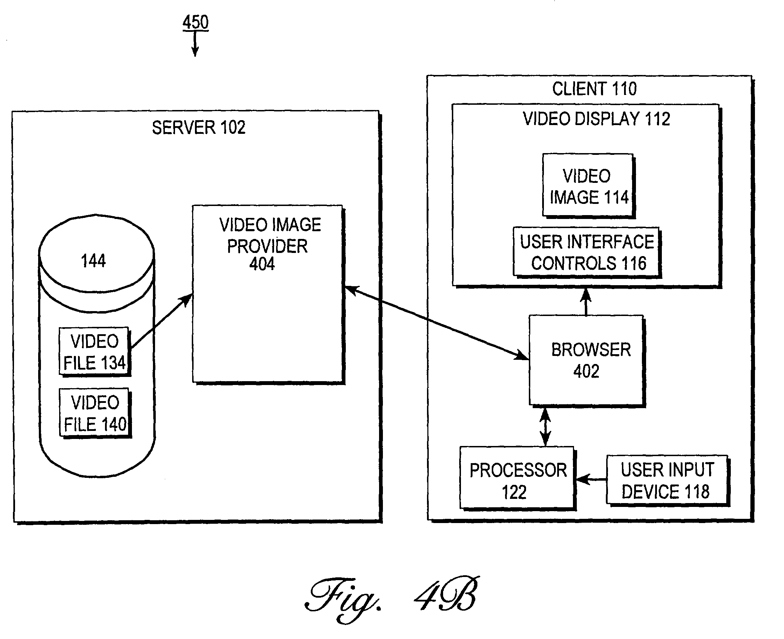

FIG. 4B is a block diagram of a video image delivery system 450 that includes a storage 144 which contains multiple versions of a video. In the illustrated example, storage 144 contains a video file 134 that has been pre-compressed using one compression ratio, and a second video file 140 that has been pre-compressed using a different, lower compression ratio. Because video file 140 has been compressed with a lower compression ratio than video file 134, the images represented in video file 140 have a higher resolution and higher quality than the corresponding images represented in video file 134. In this example, the bandwidth between server 102 and client 110 is such that highly compressed video file 134 can be delivered in real-time. However, the amount of data contained in video file 140 is too great relative to the bandwidth between server 132 and client 110 for video file 140 to be viewed at client 110 in real-time.

According to an embodiment of the invention, server 102 is configured to retrieve the higher quality video images from video file 140 in response to "next image" requests from client 110. Thus, a user is provided with video images that are of higher quality than those images that can be provided in real-time through video stream 134.

Although storage 144 is illustrated as having only two video files 134 and 140, embodiments of the invention are limited to any particular number of files. For example, storage 144 may contain any number of versions of a particular video that have each been pre-compressed using a different compression ratio.

### PROVIDING A GALLERY OF IMAGES

In certain embodiments, server 102 sends a gallery of images to client 110. In one embodiment, the gallery of images includes a set of thumbnail images that depict a select group of images from a particular video. By selecting a particular image from the gallery of images, a user can quickly locate and display a high quality image of a particular image within a video stream.

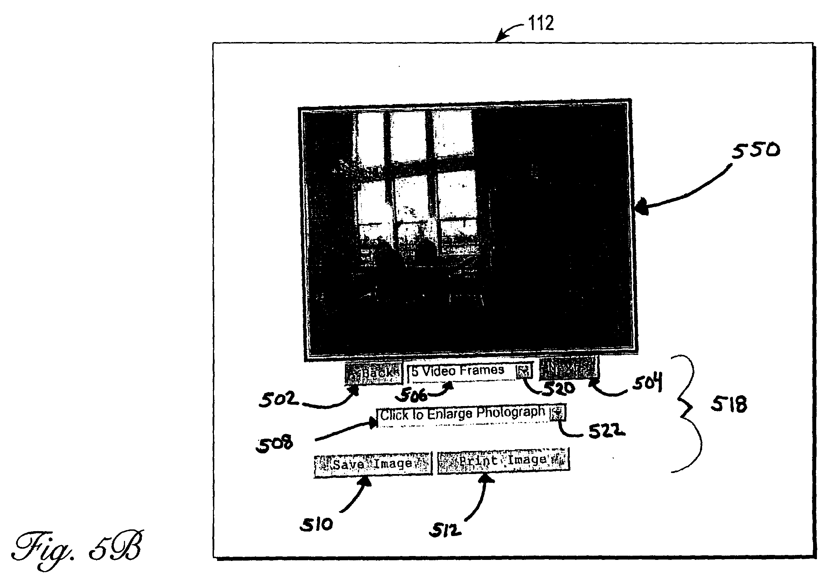

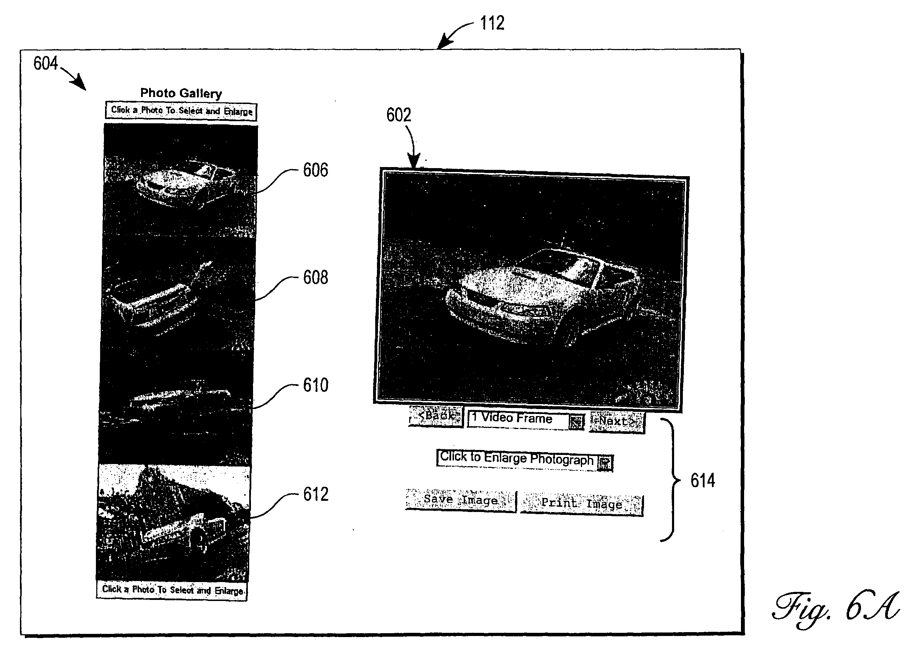

For example, FIG. 6A depicts video display 112 currently displaying a photo gallery 604, a current video image 602 and user interface controls 614. Photo gallery 604 includes a set of thumbnail images 606-612 that depict a select group of images from a particular video. Video image 602 is a higher quality (less compressed) image from the same video. User interface controls 614 perform similar functions to those previously described for user interface controls 518 in FIG 5.

For explanation purposes, it shall be assumed that the particular video is "VIDEO_A" which is stored in both video files 134 and 140 as previously illustrated in FIG. 4B. It shall also be assumed that video file 134 has been pre-compressed using a first compression ratio such that it could be played in real-time over the communication medium connecting client 110 and server 102 and that video file 140 that has been pre-compressed using a second compression ratio such that it could not be played in real-time over the communication medium connecting client 110 and server 102.

In one embodiment, in response to receiving an initial request to receive images from VIDEO_A, video image provider 404 retrieves a group of video images from video file 134. This group of images may be selected using a variety of methods. For example, video image provider 404 may select an image that is associated with every thirtieth frame. Alternatively, the video file may contain information that indicates the images that are to be displayed in a photo gallery. Embodiments of the invention are not limited to any particular method of selecting the group of images that are to be included in a photo gallery.

In addition to the photo gallery images, in certain embodiments, video image provider 404 also retrieves a higher quality video image from video file 140. In one embodiment, the higher quality video image corresponds to an image within the photo gallery. For example, video image 602 represents a higher quality image of the same image that is depicted in thumbnail image 606.

After retrieving the images, server 102 sends image data that includes the photo gallery video images, the high quality video image and a set of user interface controls to client 110. In one embodiment, the image data is referenced in an HTML page that sent to client 110 and which can be decoded by browser 402.

In response to receiving the image data, as depicted in FIG. 6A, browser 402 decodes the image data and displays gallery 604, video image 602 and user interface controls 614 on video display 112. Thereafter, as previously described for FIG. 5, the user can manipulate user interface controls 614 to perform certain functions on video image 602 or to request a next image from server 102. In addition, by selecting one of thumbnails 606-612, the user may cause a high quality image of the selected thumbnail image to be displayed in place on video image 602.

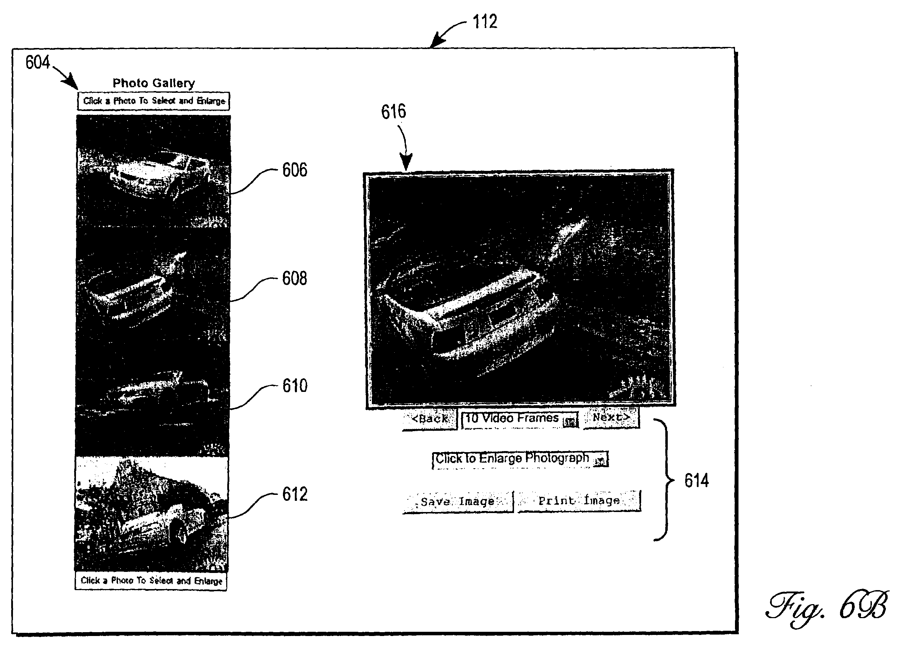

For example, by selecting thumbnail 608, a "specific" image request is sent from client 110 to sever 102. In response to receiving the specific image request, video image provider 404 retrieves a corresponding high quality image of thumbnail image 608 from video file 140. Image data containing the high quality image is then returned to client 110. As depicted in FIG. 6B, upon receiving the image data, browser 402 displays the high quality image as video image 616 on video display 112.

### DIGITAL VIDEO IMAGE DELIVERY OPERATION

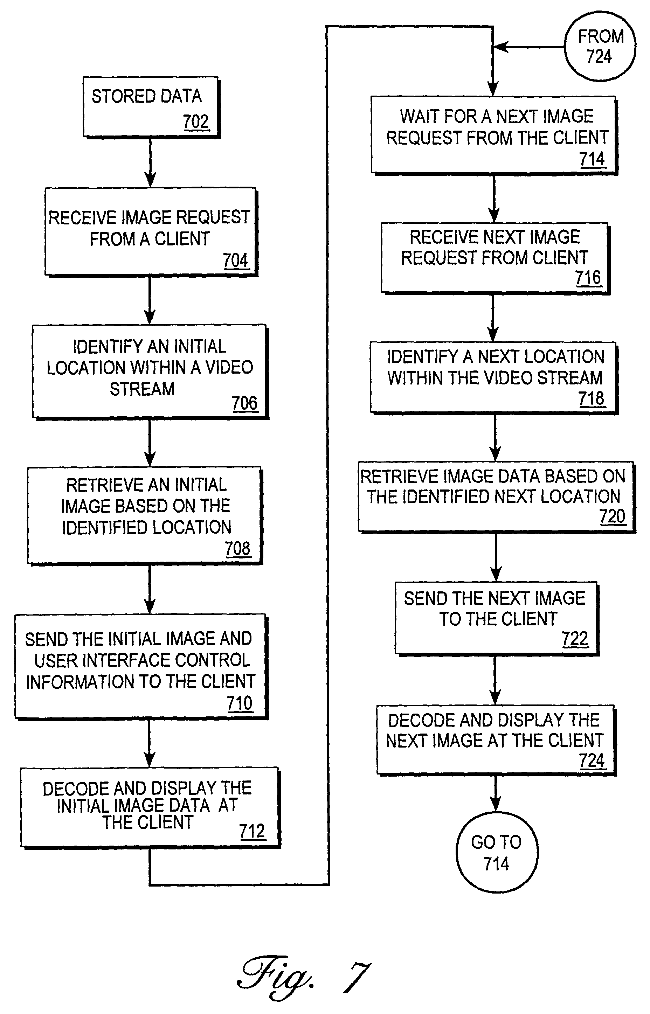

FIG. 7 contains a flow diagram that illustrates the steps performed by a video image delivery system according to certain embodiments of the inventions. For explanation purposes, FIG 7 is described with reference to FIG. 4A, FIG. 5A, FIG. 5B and FIG. 8.

In this example, block 702 generally represents digital video data stored on a storage device of a video server. The digital data may be uncompressed or pre-compressed. However, if the video data is pre-compressed, it is not pre-compressed to the degree required to be able to transmit the video to a client for normal-speed playback in real time. Consequently, some additional on-the-fly compression must be performed to send the video to the client for normal-speed, real-time playback. In this example, it will be assumed that the digital video data contains video stream portion 800 which is stored as video file 104 on storage device 124. It shall also be assumed that, based on the bandwidth of the communication medium between server 102 and client 110, video file 104 includes video images having an image quality that, unless compressed, cannot be transmitted to client 110 for normal-speed playback in real time.

At step 704, the server receives a request to send a video image to a client. For example, an image request may be sent from client 110 to server 102 in response to a user entering a URL or by selecting a hypertext link that is contained in a page displayed by browser 402.

At step 706, in response to receiving the image request, an initial image location is identified within a video stream. For example, in response to receiving the image request, video image provider 404 may identify image location 810 within video stream 800 as the initial image location. In certain embodiments, the image location that is associated with the beginning of the video file is selected as the default initial image location.

At step 708, based on the identified location, an initial image is retrieved from the video stream. For example, based on image location 810, video image provider 404 retrieves image data 189 from video stream 800.

At step 710, server 102 sends image data that includes the initial image and user interface controls information to client 110. In one embodiment, the location within the video stream that corresponds to the image data is marked or tagged as the current image location. For example, server 102 sends image data 189 to client 110 and marks image location 810 as the current image location.

At step 712, upon receiving the image data at client 110, the initial image and user interface controls are displayed on a video display associated with the client 110. For example, upon receiving the image data 189, browser 402 decodes and displays the image data as video image 516 and user interface controls 518 on video display 112 as depicted in FIG. 5A.

At step 714, the server 102 waits for a "next image" request to be received from client 110.

At step 716, a "next image" request is received by server 102 from client 110. For example, by selecting back button 502 or next button 504, a user may cause a "next image" request to be sent from client 110 to server 102.

At step 718, in response to receiving the "next image" request, the server identifies a next location within the video stream based on the current image location. In certain embodiments, information contained in the next image request may be used in determining the next location. For example, if the next image request includes an image offset and direction of "+5", upon receiving the next image request, based on the current image location (810) video image provider identifies image location 820 as the next image location within video stream 800.

At step 720, image data is retrieved from the video stream based on the identified next location. For example, based on image location 820, video image provider 404 retrieves image data 194 from video stream 800.

At step 722, the image data is sent from the server to the client. In one embodiment, the location within the video stream that corresponds to the image data is marked or tagged as the current image location. For example, server 102 sends image data 194 to client 110 and marks image location 820 as the new current image location.

At step 724, upon receiving the image data at client 110, the image and user interface controls are displayed on a video display associated with the client. For example, upon receiving the image data 194, browser 402 decodes and displays the image data as video image 550 and user interface controls 518 on video display 112 as depicted in FIG. 5B.

### ALTERNATIVES, EXTENSIONS

A mechanism for providing high quality snapshots that correspond to images from a lower-quality video stream is provided. This mechanism allows video images to be displayed at a client even if the client is not configured to play the video streams from which the image are extracted. By providing a gallery of thumbnail images that correspond to images within the video, a user can quickly identify and retrieve those images that are of interest to them. In addition, because the amount of image data that is sent to the client is not dependent on the bandwidth of the communication link that has been established between the server and client, images displayed at the client are of higher quality than those images that may be displayed in real-time through a video stream.

In describing certain embodiments of the invention, several drawing figures have been used for explanation purposes. However, the invention is not limited to any particular context as shown in drawing figures, and the spirit and scope of the invention include other contexts and applications. For example, although embodiments of the invention have illustrated a single high quality snapshot image being displayed at a client, in certain embodiments, the video image provider provides the client image data that allows multiple high quality images to be displayed at the client concurrently. Thus, the specification and drawings are, accordingly, to be regarded in an illustrative rather than a restrictive sense.

In addition, in this disclosure, including in the claims, certain process steps are set forth in a particular order, and alphabetic and alphanumeric labels are used to identify certain steps. Unless specifically stated in the disclosure, embodiments of the invention are not limited to any particular order of carrying out such steps. In particular, the labels are used merely for convenient identification of steps, and are not intended to imply, specify or require a particular order of carrying out such steps.

## Claims

1. A method for providing images from a server to a client over a communication medium with a limited bandwidth, the method comprising the steps of:
identifying a first location in a first video stream, wherein the first location is associated with a first image;
transmitting data depicting said first image from said server to said client;
receiving at said server a message from said client that requests a next image; and
determining a second location in said first video stream that has a particular positional relationship in said first video stream relative to said first location;
transmitting to said client as said next image a second image associated with said second location;
wherein said limited bandwidth is such that playing said first video stream in real time over said communication medium would produce images having a first image quality; and
wherein said first and second images are transmitted at an image quality that is greater than said first image quality.

2. The method of Claim 1 further comprising the steps of:
receiving at said server a request from said client to begin transmitting said first video stream over said communication medium; and
in response to said request, transmitting images of said first video stream over said communication medium at said first image quality, wherein said images of said first video stream begin transmitting at said second image.

3. The method of Claim 1 wherein the step of determining a second location in said first video stream that has a particular positional relationship in said first video stream comprises the steps of:
identifying an offset from said first location; and
determining said second location in said first video stream based on said offset.

4. The method of Claim 1 wherein the step of transmitting data depicting said first image further comprises the steps of:
determining a plurality of locations within a second video stream;
retrieving image data that is associated with the plurality of image locations; and
transmitting said image data for display as a gallery of images at said client.

5. The method of Claim 4 further comprising the steps of:
after transmitting said image data for display as a gallery of images at said client, receiving a selection request message from said client that identifies a particular gallery image within said gallery of images; and
in response to receiving the selection request message determining a location in said second video stream based on the selected gallery image; and
transmitting to said client as said next image a third image associated with said location in said second video stream.

6. The method of Claim 4 wherein the first video stream and the second video are different video streams.

7. The method of Claim 4 wherein the first video stream and the second video are the same video stream.

8. The method of Claim 1 wherein:
the step of receiving at said server a message from said client that requests a next image includes the step of receiving at a first server a message from said client that requests a next image; and
the step of transmitting to said client as said next image a second image associated with said second location includes the step of, from a second server, transmitting to said client as said next image a second image associated with said second location, wherein said first server is different from said second server.

9. The method of Claim 1 wherein:
the first location corresponds to a first frame;
the step of determining a second location is performed by identifying a second frame that is a particular number of frames from the first frame; and
the step of transmitting to said client as said next image includes the step of transmitting to said client as said next image a second image associated with the second frame.

10. The method of Claim 1 wherein:
the step of transmitting data depicting said first image from said server to said client includes the step of transmitting data depicting said first image from said server to a first client; and
the step of transmitting to said client as said next image a second image associated with said second location includes the step of transmitting to a second client as said next image a second image associated with said second location, wherein said first client is different from said second client.

11. A computer-readable medium carrying one or more sequences of one or more instructions for providing images from a server to a client over a communication medium with a limited bandwidth, the one or more sequences of one or more instructions including instructions which, when executed by one or more processors, cause the one or more processors to perform the steps of:
identifying a first location in a first video stream, wherein the first location is associated with a first image;
transmitting data depicting said first image from said server to said client;
receiving at said server a message from said client that requests a next image; and
determining a second location in said first video stream that has a particular positional relationship in said first video stream relative to said first location;
transmitting to said client as said next image a second image associated with said second location;
wherein said limited bandwidth is such that playing said first video stream in real time over said communication medium would produce images having a first image quality; and
wherein said first and second images are transmitted at an image quality that is greater than said first image quality.

12. The computer-readable medium of Claim 11 further comprising instructions for performing the steps of:
receiving at said server a request from said client to begin transmitting said first video stream over said communication medium; and
in response to said request, transmitting images of said first video stream over said communication medium at said first image quality, wherein said images of said first video stream begin transmitting at said second image.

13. The computer-readable medium of Claim 11 wherein the step of determining a second location in said first video stream that has a particular positional relationship in said first video stream comprises the steps of:
identifying an offset from said first location; and
determining said second location in said first video stream based on said offset.

14. The computer-readable medium of Claim 11 wherein the instructions for performing the step of transmitting data depicting said first image further comprises instructions for performing the steps of:
determining a plurality of locations within a second video stream;
retrieving image data that is associated with the plurality of image locations; and
transmitting said image data for display as a gallery of images at said client.

15. The computer-readable medium of Claim 14 further comprising instructions for performing the steps of:
after transmitting said image data for display as a gallery of images at said client, receiving a selection request message from said client that identifies a particular gallery image within said gallery of images; and
in response to receiving the selection request message determining a location in said second video stream based on the selected gallery image; and
transmitting to said client as said next image a third image associated with said location in said second video stream.

16. The computer-readable medium of Claim 14 wherein the first video stream and the second video are different video streams.

17. The computer-readable medium of Claim 14 wherein the first video stream and the second video are the same video stream.

18. The computer-readable medium of Claim 11 wherein:
the step of receiving at said server a message from said client that requests a next image includes the step of receiving at a first server a message from said client that requests a next image; and
the step of transmitting to said client as said next image a second image associated with said second location includes the step of, from a second server, transmitting to said client as said next image a second image associated with said second location, wherein said first server is different from said second server.

19. The computer-readable medium of Claim 11 wherein:
the first location corresponds to a first frame;
the step of determining a second location is performed by identifying a second frame that is a particular number of frames from the first frame; and
the step of transmitting to said client as said next image includes the step of transmitting to said client as said next image a second image associated with the second frame.

20. The computer-readable medium of Claim 11 wherein:
the step of transmitting data depicting said first image from said server to said client includes the step of transmitting data depicting said first image from said server to a first client; and
the step of transmitting to said client as said next image a second image associated with said second location includes the step of transmitting to a second client as said next image a second image associated with said second location, wherein said first client is different from said second client.

21. A computer system for providing images from a server to a client over a communication medium with a limited bandwidth, the computer system comprising:
a memory;
one or more processors coupled to the memory; and
a set of computer instructions contained in the memory, the set of computer instructions including computer instructions which when executed by the one or more processors, cause the one or more processors to perform the steps of:
identifying a first location in a first video stream, wherein the first location is associated with a first image;
transmitting data depicting said first image from said server to said client;
receiving at said server a message from said client that requests a next image; and
determining a second location in said first video stream that has a particular positional relationship in said first video stream relative to said first location;
transmitting to said client as said next image a second image associated with said second location;
wherein said limited bandwidth is such that playing said first video stream in real time over said communication medium would produce images having a first image quality; and
wherein said first and second images are transmitted at an image quality that is greater than said first image quality.

22. The system of Claim 21 further comprising the steps of:
receiving at said server a request from said client to begin transmitting said first video stream over said communication medium; and
in response to said request, transmitting images of said first video stream over said communication medium at said first image quality, wherein said images of said first video stream begin transmitting at said second image.

23. The system of Claim 21 wherein the step of determining a second location in said first video stream that has a particular positional relationship in said first video stream comprises the steps of:
identifying an offset from said first location; and
determining said second location in said first video stream based on said offset.

24. The system of Claim 21 wherein the step of transmitting data depicting said first image further comprises the steps of:
determining a plurality of locations within a second video stream;
retrieving image data that is associated with the plurality of image locations; and
transmitting said image data for display as a gallery of images at said client.

25. The system of Claim 24 further comprising the steps of:
after transmitting said image data for display as a gallery of images at said client, receiving a selection request message from said client that identifies a particular gallery image within said galley of images; and
in response to receiving the selection request message determining a location in said second video stream based on the selected gallery image; and
transmitting to said client as said next image a third image associated with said location in said second video stream.

26. The system of Claim 24 wherein the first video stream and the second video are different video streams.

27. The system of Claim 24 wherein the first video stream and the second video are the same video stream.

28. The system of Claim 21 wherein:
the step of receiving at said server a message from said client that requests a next image includes the step of receiving at a first server a message from said client that requests a next image; and
the step of transmitting to said client as said next image a second image associated with said second location includes the step of, from a second server, transmitting to said client as said next image a second image associated with said second location, wherein said first server is different from said second server.

29. The system of Claim 21 wherein:
the first location corresponds to a first frame;
the step of determining a second location is performed by identifying a second frame that is a particular number of frames from the first frame; and
the step of transmitting to said client as said next image includes the step of transmitting to said client as said next image a second image associated with the second frame.

30. The system of Claim 21 wherein:
the step of transmitting data depicting said first image from said server to said client includes the step of transmitting data depicting said first image from said server to a first client; and
the step of transmitting to said client as said next image a second image associated with said second location includes the step of transmitting to a second client as said next image a second image associated with said second location, wherein said first client is different from said second client.
